# EUROPEAN PATENT APPLICATION

(11) **EP 2 463 508 A1**
(43) Date of publication of application: **13.06.2012**
(21) Application number: 11192476.7
(22) Date of filing: 07.12.2011
(51) Int. Cl.: F03B 7/00, F03B 17/06

(54) **A system for generating hydroelectric power**

(30) Priority: 07.12.2010 IT TO20100977
(71) Applicant: Welt Company S.r.l., 13011 Borgosesia (Vercelli) (IT)
(72) Inventor: Donnianni, Romano, 13011 Borgosesia (Vercelli) (IT); Donnianni, Paolo, 13011 Borgosesia (Vercelli) (IT); Donnianni, Marco, 13011 Borgosesia (Vercelli) (IT)
(74) Representative: Gallarotti, Franco

(57) **Abstract**

A system for generating hydroelectric power comprises one or more units (1) operatively arranged along an artificial watercourse (C). Each unit (1) comprises at least:
- a generating unit (2), which includes a mechanical interface (14) for converting the kinetic energy of the water into mechanical energy, an electric-power generator (11), transmission means (12, 13) for transmitting to the electric-power generator (11) the mechanical energy obtained by the mechanical interface (14); and
- a bearing structure (3), which supports at least the mechanical interface (14) and the transmission means (12, 13) of the generating unit (2).

The load-bearing structure includes a substantially bridge structure (3) provided for being installed on the two opposite banks (S) of the watercourse (C) so that it over-bridges the latter.

## Description

### Field of the invention

The present invention relates to exploitation and creation of clean energy from renewable sources and has been developed with particular reference to the field of generation of hydroelectric power.

### State of the art

As is known, hydroelectric energy is obtained by converting the gravitational potential energy of a mass of water into kinetic energy when it passes from one height to a lower height, said kinetic energy being then converted into electrical energy by means of an electric-power generator - typically an alternator ― associated to a turbine.

Hydroelectric power is usually obtained from watercourses and lakes, thanks to the creation of dams and penstock conduits. For this purpose, in penstock hydroelectric power plants water falling from great heights is exploited, which is typically available in mountain regions. Also known are hydroelectric power plants that use flowing water, which exploit large masses of river water, with considerable rates of flow at a constant regime, where there is passage between relatively small differences in height.

Known hydroelectric generating systems constitute sources of clean and renewable energy, but entail the construction of water-storage basins and considerable works of canalization and damming, which involve a high initial economic cost, with evident environmental and scenic impact.

### Summary of the invention

Basically, the idea underlying the present invention is to exploit the pre-existence of artificial watercourses, whether canalized or otherwise, for generating electric power. As is known, there exist various types of watercourses of the type indicated, for example for cooling and/or for generating steam at a high pressure for electric power stations fuelled by coal, oil, or other fuels, for supplying water to industrial plants either for producing electric power or for processing raw materials (e.g., washing of wool), or else for evacuating water from said industrial plants, for example, for depuration purposes. The use of artificial watercourses is widespread also for purposes of irrigation in the agricultural sector.

The corresponding watercourses generate as they advance considerable distributed potential energy, which today is not exploited. This energy is certainly less concentrated than in classic hydroelectric systems, which are based on dams, penstocks, and big differences in height and which, however, as has been said, entail considerable works in terms of costs and environmental impact.

In summary, according to the invention, a hydroelectric micro-generation system with reduced environmental impact is proposed, which is flexible and can be adapted to pre-existing situations and will enable exploitation of the energy of water substantially all along an artificial watercourse (and not only at its end), but without jeopardizing the final purpose for which the watercourse itself was created (supply/cooling of plants, evacuation of water, irrigation, etc.).

The specific characteristics of the invention are summed up in the attached claims, which form an integral part of the technical teaching provided herein in relation to the invention.

### Brief description of the drawings

Further purposes, characteristics, and advantages of the invention will emerge clearly from the ensuing detailed description, with reference to the annexed drawings, which are provided purely by way of explanatory and nonlimiting example and in which:
- Figure 1 is a simplified block diagram of an electric-power generating system according to the invention;
- Figures 2-16 are schematic cross sections of stations for generating electric power of a system according to the invention, in respective possible embodiments.

### Description of preferred embodiments of the invention

Reference to "*an embodiment"* or *"one embodiment"* in the framework of the present description is meant to indicate that a particular configuration, structure, or characteristic described in relation to the embodiment is comprised in at least one embodiment. Hence, phrases such as "*in an embodiment"* or *"in one embodiment"* and the like that may be present in different points of the present description, do not necessarily all refer to one and the same embodiment. Moreover, the particular configurations, structures, or characteristics can be combined in any adequate way in one or more embodiments. The references used in what follows are only provided for convenience and do not define the sphere of protection or the scope of the embodiments.

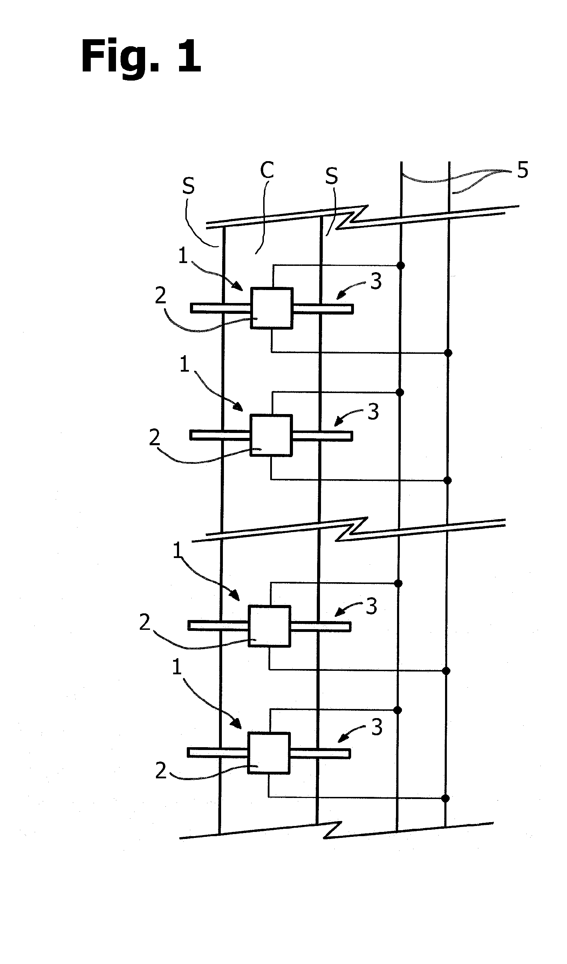

Figure 1 is a schematic illustration of an example of system for generating hydroelectric power according to the present invention, provided for installation on a pre-existing artificial watercourse, designated by C, delimited at the sides by two banks S. For the purposes of the present description, it is assumed that the watercourse C is an open artificial canal, such as for example a canal for flow of irrigation water.

In the example illustrated, the system comprises a plurality of electric-power generating units, each designated by 1, operatively arranged along the watercourse C. Each unit 1 comprises at least one arrangement for generating electric power, designated as a whole by 2. Said arrangement 2 basically includes a mechanical interface, which performs the task of capturing the kinetic energy of the water and converting it into mechanical energy, which is transmitted to an electric-power generator, such as for example an alternator. The aforesaid interface can be chosen from among the currently existing ones ― for example, an impeller with vertical or horizontal axis, a Pelton, Francis, or Kaplan turbine, a propeller with blades or paddles, etc. ― or can possibly be devised and designed for the specific case in order to have as little impact as possible on the characteristics of the water for which the watercourse C has been created.

Each unit 1 moreover includes a load-bearing structure, which supports at least the aforesaid mechanical interface and the means for transmitting the corresponding mechanical energy to the electric-power generator. According to an important characteristic of the invention, the bearing structure includes a substantially bridge structure, designated as a whole by 3, provided for being installed on the two banks S so that it straddles or over-bridges the watercourse C.

The units 1, which are the same as one another, have an as a whole compact structure to facilitate installation and reduce the environmental impact. For this purpose, preferably, the electric-power generators of the arrangements 2 have relatively contained overall dimensions, sized for having a power indicatively comprised between 1 and 200 kWp, even though higher powers are not ruled out. In a preferred embodiment of the system, a number of generators of different units 1 are connected electrically in parallel, by means of an electric line 5, to send the electric power generated to a transformer substation so that it can then be introduced in a known way into an electrical distribution grid.

For the purposes of implementation of the invention, various embodiments are possible that can be exploited in relation to the existing situation, i.e., in relation to the type of pre-existing watercourse C. Some possible embodiments of the invention will be described in what follows with reference to respective schematic cross-sectional views. It should be noted that, for greater clarity of representation, in the attached figures the electric wiring at output from the electric-power generators has not been represented.

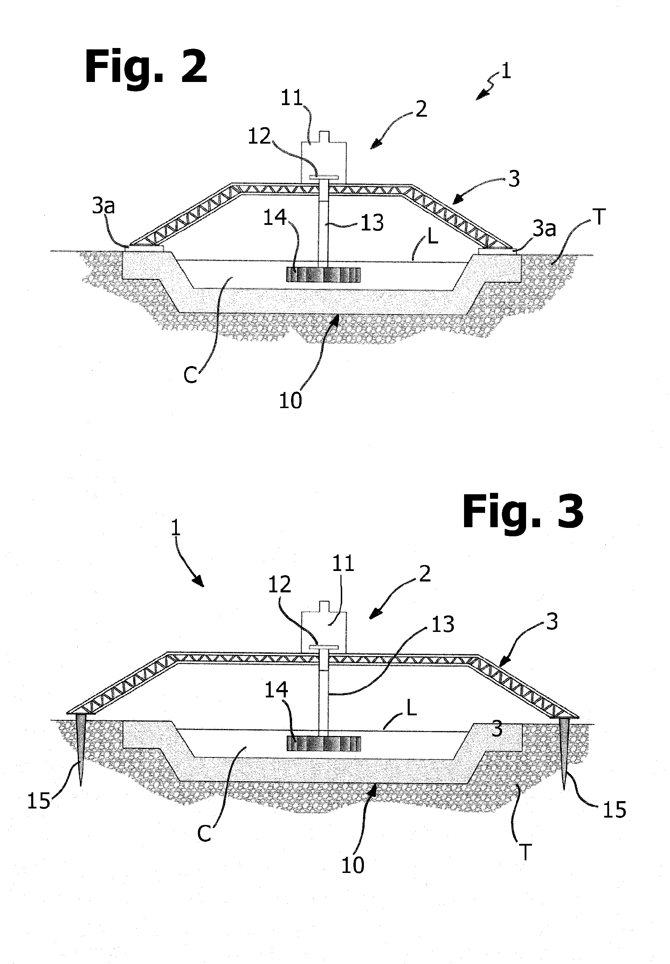

Figure 2 is a schematic illustration of an embodiment of the invention, and in particular of a unit 1 suitable for use in combination with watercourses with controlled flowrate, canalized in masonry or other structures, for example, reinforced-concrete structures.

In said figure, designated by 10 is one of the structures that define the watercourse C, the normal level of the latter being designated by L. The generating arrangement 2 comprises an external electric-power generator 11, i.e., one not submerged in the water, which in the example is supported directly by the bridge structure 3, which spans the watercourse C. The housing of the generator 11, designated by 11a, is preferably of a fluid-tight type, in so far as it is exposed to atmospheric agents. The generator 11, which may be of any known type, is here mounted on the bridge structure 3, via brackets and/or supports fixed with respect to the structure 3, in a way substantially coaxial to a multiplier 12 and to a main transmission shaft 13, which supports the mechanical interface 14. Said interface is here represented by a known impeller with vertical axis, completely submerged in the watercourse. Said type of impeller is particularly suitable for the purposes of use of the unit 1 along watercourses having a low depth, for example a depth indicatively comprised between 0.5 and 1.5 m.

The bridge structure 3 is preferably made of metal, in particular of a tubular lattice type or sectional-steel type, and comprises at the two ends plates 3a for anchorage to the opposite sides of the concrete structure 10, for example via screws. In a particularly advantageous embodiment of the invention, the bridge structure 3 (or one or more of its parts) is substantially of a telescopic type, or in any case of a length-adjustable type in order to enable adaptation thereof to the breadth of the watercourse C.

The mechanical-transmission means 11, 12 operatively set between the impeller 14 and the generator 11 are preferably configured to enable raising of the impeller itself for maintenance operations. For this purpose, for example, the shaft 13 may be of a telescopic type, or else the coupling between the multiplier 11 and the shaft 13 may be of a grooved type, configured to enable axial lifting of the arm with respect to the multiplier.

Figure 3 regards an embodiment similar to that of Figure 2, but in this case the bridge structure 3 is provided for anchorage to the soil T in which the structure 10 is partially buried, on the two opposite banks of the watercourse C. For this purpose pile shoes or screws of adequate size are used, designated by 15.

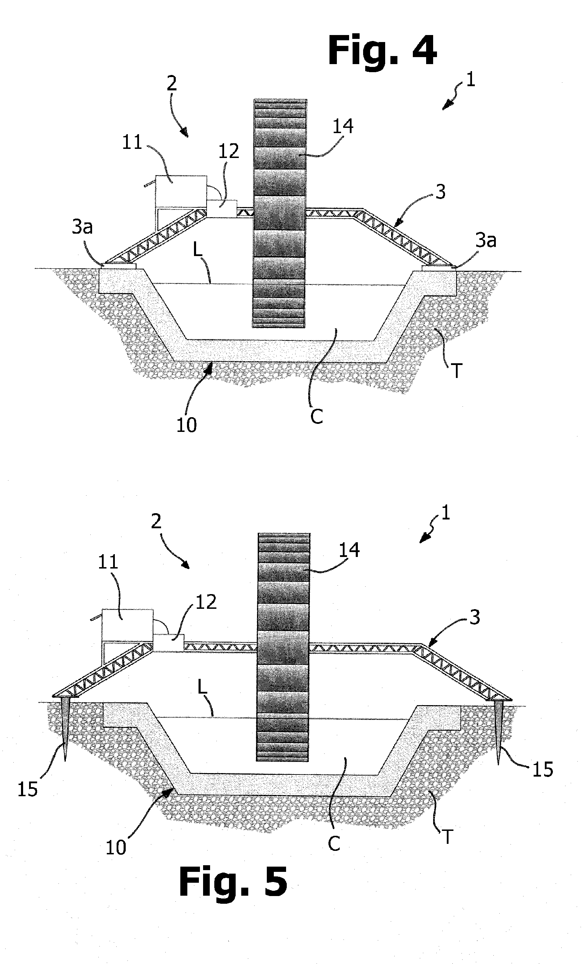

Figures 4 and 5 illustrate the case of a unit 1 for artificial canalizations of a medium-to-large depth, for example comprised between 1 and 12 m. The impeller 14 is in this case of larger dimensions than in the case illustrated in Figures 1 and 2, has a horizontal axis, and is only partially immersed in the watercourse C. The impeller 14 may, for example, be made of aluminium, in order to lighten the load on the bridge structure 3, and is supported in a rotatable way via suitable means ― for example, sliding or rolling bearings ― associated to the bridge structure 3. Also in the embodiments of Figures 4 and 5, the electric-power generator 11 is located out of the water and mounted on the structure 3 after the shaft 13 (not visible) and the multiplier 12. In the case of Figure 4, the structure 3 is provided for direct fixing to the edges of the concrete structure 10, via the plates 3a, whereas in the case of Figure 5 the structure is provided for anchorage to the ground T, via pile shoes and/or screws 15 of adequate diameter and length.

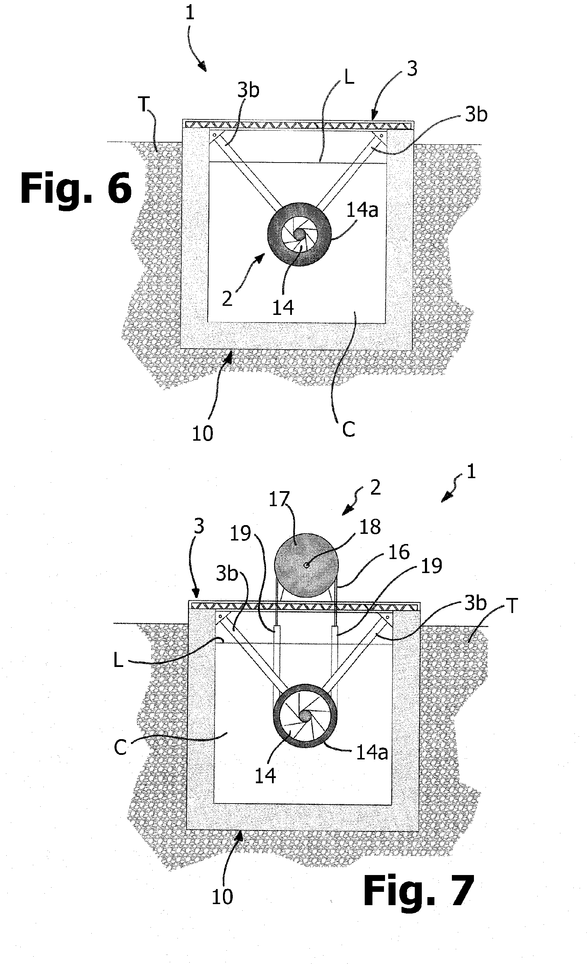

In the embodiments illustrated previously, the generator 11 is supported by the bridge structure 3 out of the water, with interposition of the transmission means 11, 12 between the impeller 4 and the generator itself. The embodiment of Figure 6 regards, instead, the case of a unit 1 the generating arrangement 2 of which is totally submerged, this being particularly suitable for canalizations with high rate of flow of the water. In this case, the arrangement 2 consists of an electric-power turbine generator of a type in itself known, with magnets integrated in a fluid-tight housing 14a, provided with suitable sealing means.

In this embodiment, the bridge structure 3 also includes rigid arms 3b, for example functioning as stays, for supporting on opposite sides the turbine arrangement 2 and keeping it in position, in the completely submerged condition. In this embodiment, the structure 3 is provided for anchorage, at the two opposite edges, to the concrete structure 10, but also anchorage to the ground T is evidently possible, as in the case of the embodiments of Figures 3 and 5, when the structure 10 is buried in the soil.

Also the embodiment of Figure 7 can advantageously be used in canalizations with high rates of flow: in this case, however, the mechanical interface of the generating arrangement 2 comprises a turbine 14 completely submerged in the watercourse C, whilst the corresponding electric-power generator is supported by the structure 3, out of the water. In this case, the transmission means comprise an endless transmission member 16, such as a belt, for transmitting the motion generated by the turbine 14 to a pulley 17, which is fitted on the shaft 18 of the generator (not visible). On the opposite side, the belt 16 is engaged on another pulley, for example fitted on a shaft of the turbine 14, which is located in a fluid-tight section of the corresponding housing 14a. Preferably, in this embodiment, the belt 16 is kept in dry conditions, and for this purpose tubular protection and guide elements 19 are provided, which project from the aforesaid fluid-tight section of the housing 14a, and within which the belt 16 can move. The top ends of the tubular elements 19 are set higher than the level L normally reached by the water. Also in this embodiment the structure 3 is provided with bottom arms 3b for supporting the turbine 4 in the respective operating position.

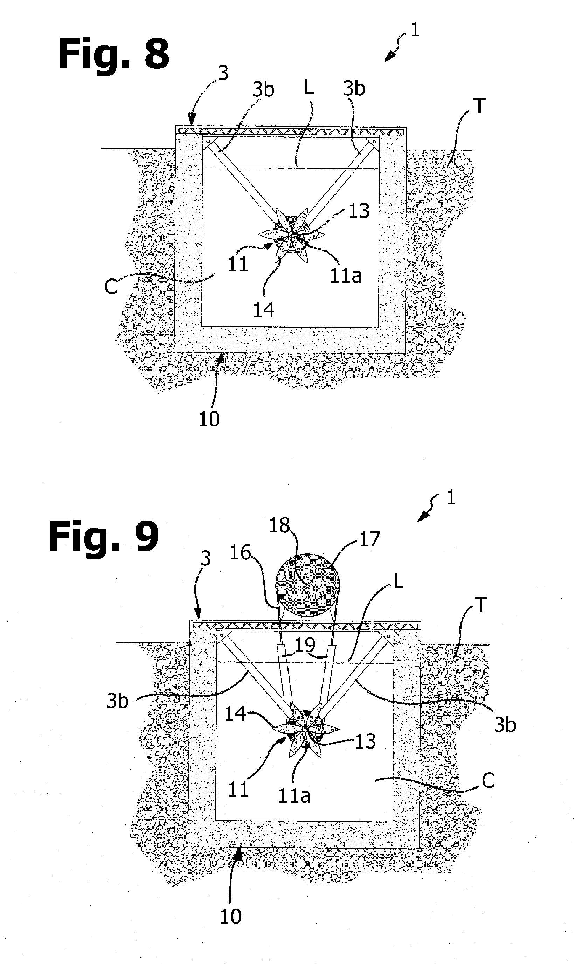

Figure 8 illustrates another embodiment, suitable for use in combination with artificial canalizations with high and medium flowrate/current of the water. Also in this embodiment the generator 11 is submerged and provided for the purpose with a fluid-tight housing, designated by 11a. In this case, the mechanical interface of the arrangement 2 is represented by a propeller 14 fitted on a shaft 13 of the generator 11, suitable sealing means being operative between the shaft and the housing. The blades of the propeller 14 are preferably sized according to the current of the watercourse C. Also in this case associated to the bridge structure 3 are the bottom arms 3b for supporting the generator 11 with the corresponding propeller 14.

Figure 9 illustrates an embodiment similar to that of Figure 8, but with a system for transmission of motion from the propeller 14 to an external generator 11, in a way similar to the case illustrated in Figure 7, i.e., with the belt 16 operating in dry conditions.

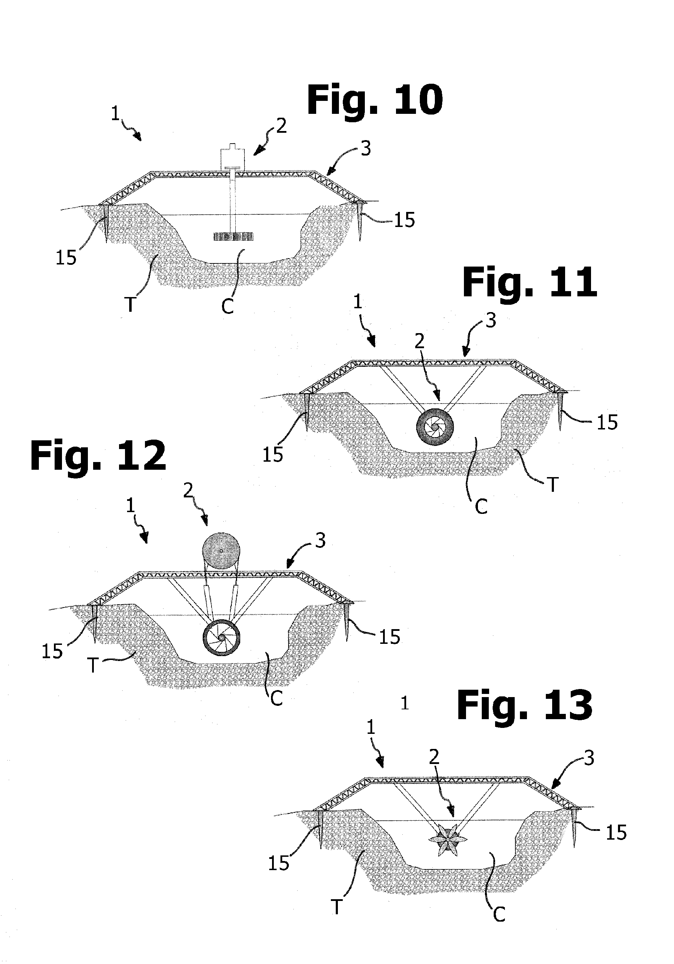

The previous embodiments have been described in relation to artificial watercourses canalized by means of masonry or other structures. It will be appreciated, on the other hand, that similar constructional solutions can be applied also in the case of small watercourses with a bed defined directly in the ground T, such as irrigation canals or ditches with partially controlled rate of flow. Figures 10, 11, 12, 13 and 14 illustrate examples of such applications, using embodiments substantially like the ones represented in Figures 2, 6, 7, 8 and 9, respectively. As may be seen, in this case the bridge structures 3 can be anchored directly to the ground T, on the opposite banks of the watercourse C, for example, via pile shoes and/or screws of adequate dimensions 15.

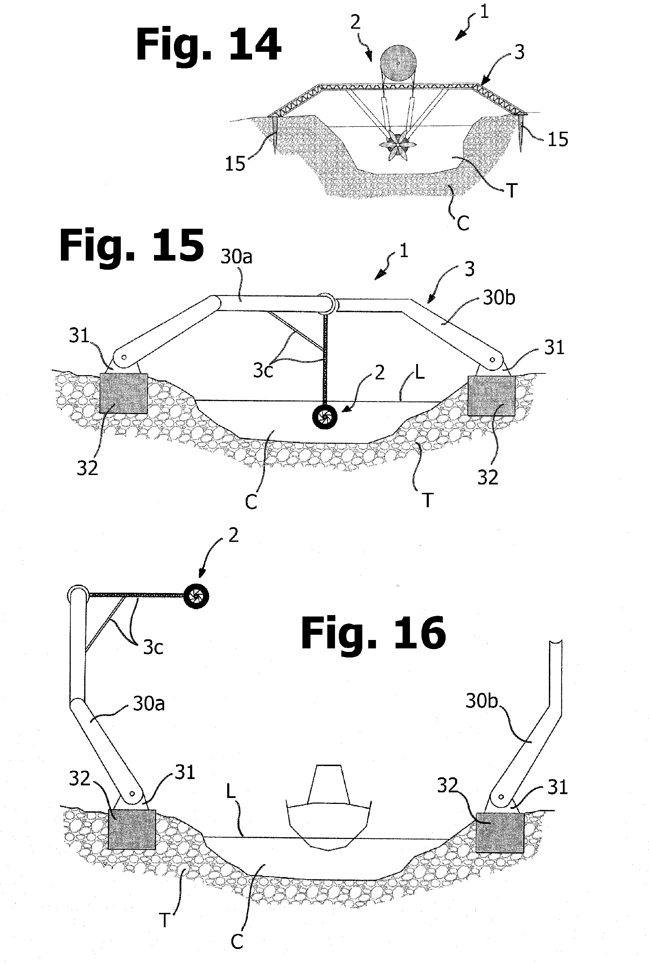

The idea underlying the invention can be used to advantage also in the case of relatively wide watercourses, i.e., ones having a relatively extensive distance between the two banks, even more than 10 m. For this purpose, of course, the bridge structures 3 will be adequately sized. The idea can evidently be applied also to the case of navigable watercourses. An example of embodiment in this sense is illustrated in Figures 15 and 16.

In this case, the bridge structure 3 comprises two parts that can be coupled together, each of which can be anchored to a respective bank of the watercourse C, and with at least one of the two parts that is mobile with respect to the other. In the case exemplified both of the aforesaid parts, designated by 30a and 30b, are mobile or can be opened, at least between a first position and a second position. Figure 15 illustrates the aforesaid first position, in which the two parts 30a and 30b are lowered or set against one another: in said condition, the arrangement 2 is set in the respective operating position, designed to convert the kinetic energy of the water into mechanical energy, and then into electric energy via the corresponding generator. In the example of Figures 15 and 16, the arrangement 2 is of a submerged type, with a turbine generator substantially of the same type as the one described with reference to Figure 7. As may be seen, the arrangement 2 is supported by a system of rigid arms 3c, fixed with respect to one of the two parts of the structure 3, i.e., the part 30a in the example illustrated. As emerges from Figure 15, the two parts 30a and 30b are structured to support one another, when they are in the first position, in order to support effectively the arrangement 2 in its correct working position. The bridge structure 3 in this case includes base modules 31, anchored to corresponding buried foundations 32, for example made of concrete, to which the respective parts 30a and 30b are hinged in order to enable raising or opening thereof into the second position, represented in Figure 16, which is an inoperative position of the generating arrangement 2.

It will be appreciated that the same idea underlying the embodiment of Figures 15 and 16 can be applied also to units 1 having generating arrangements 2 different from the one exemplified, including arrangements 2 with a non-submerged electric-power generator 11, as, for example, in the case of Figure 2 or Figure 7. In said embodiments an external generator 11 will be associated to the same part 30a or 30b that supports the corresponding impeller and the corresponding transmission means.

It should be noted that the solution with parts 30a, 30b of the bridge structure 3 that can be opened can advantageously be used not only to enable possible passage of watercraft but also for purposes of maintenance and for protection of the arrangements 2 from possible floods. The solution of envisaging a bridge structure 3 with at least one part that can be raised can be applied also to the case of canalized watercourses of a relatively small breadth, of the type mentioned in relation to the embodiments of Figures 2-14. To this purpose, it will be appreciated that it is sufficient that only a single part of the bridge structure can be raised, the other part possibly consisting in a rest element, not necessarily extending in a cantilever fashion with respect to the watercourse, to support the part which can be raised when the latter is in the lowered position.

Additionally, the at least one part which can be raised and which supports the generation arrangement can be mounted to be turn about a substantially vertical axis, for instance to make maintenance operations easier. For instance, by referring to the case of figures 15-16, the module 31 of part 30a can include a lower element, fixed to the basement 32, and an upper element, mounted on the lower element in a manner to rotate about the above said vertical axis and bearing the hinge for the part 30a.

It should again be pointed out that, in a preferred embodiment (not illustrated), the submerged parts of the arrangements 2 are protected by protection elements, which are also supported directly or indirectly by the bridge structure 3. Said protections will be sufficiently sturdy to withstand any impact caused by foreign bodies that may be present in the watercourse, but such as not to jeopardize the linearity of the water flow; for example, said protection elements may include adequate metal gratings or cages. The presence of protection elements of the type indicated is particularly advantageous in the case of watercourses that may be easily contaminated by solid foreign bodies.

In a particularly advantageous embodiment (not represented), one and the same unit 1 includes a plurality of generating arrangements 2 (interface, transmission means, and generator), all of which are supported by one and the same bridge structure 3. Said solution can evidently be applied also to the case of structures 3 with parts that can be opened, as in the example of Figures 15 and 16, in which case to each part 30a, 30b there may be associated at least one generating arrangement.

From the foregoing description, the characteristics and advantages of the present invention emerge clearly. The generation system proposed enables clean energy to be obtained from renewable sources in a way that is flexible and can be adapted to various existing situations, optimizing exploitation of water energy along a watercourse, and not only at the end thereof, as typically occurs for known hydroelectric systems. The provision of a bridge supporting structure enables safe anchorage of the various units, but with a reduced environmental impact. In the preferred embodiment the fact that the bridge structure, or one or more of its parts, is provided for being adjustable in length enables a fast adaptability to the width of the artificial watercourse in question.

The system forming the subject of the invention enables generation of even large amounts of clean electric power by connecting in parallel a number of units 1 positioned along one and the same watercourse C, whether canalized or otherwise, even set at variable distances apart. A hydroelectric-power generating system according to the invention can produce, for example, up to 200 kWp, but also beyond 200 kWp in a relatively short stretch, according to the flowrate of the watercourse and the number of units 1 envisaged (for example, four 20-kWp units over a stretch of some fifty metres of watercourse, or a number of units along the canal of variable power, designed to reach powers of even several megawatts). A substantial advantage of the invention is that the purpose or final destination of the canalization to which the generation system is applied is in no way jeopardized. Finally, amongst the advantages of the invention there may be cited:
- possibility of generating hydroelectric power not only where there is a waterfall, but along the entire stretch of a watercourse;
- possibility of exploiting energy which would otherwise not be used in all watercourses with controlled flowrate;
- simple and fast adaptability to existing situations;
- low system and running costs;
- possibility of producing different levels of power thanks to the modularity of the system, from a few kilowatts to hundreds of kilowatts, with one or more generation units.

It is clear that numerous variations may be made by a person skilled in the sector to the electric-power generation system described by way of example herein, without thereby departing from the scope of the invention as defined by the annexed claims.

## Claims

1. A system for generating hydroelectric power, comprising one or more units (1) to be operatively positioned along an artificial canalized or non-canalized watercourse (C) delimited by two corresponding banks (S), each unit (1) comprising
- at least one generating arrangement (2) which includes a mechanical interface (14), configured for converting kinetic energy of the water into mechanical energy, an electric generator (11), for generating electric power, transmission means (12, 13) for transmitting the mechanical energy obtained through the mechanical interface (14) to the electric generator (11), and
- one bearing structure (3) which supports at least the mechanical interface (14) and the transmission means (12, 13) of one said generating arrangement (2),
wherein the bearing structure includes a substantially bridge structure (3) prearranged to be installed so as to bridge the two opposite banks (S) of the watercourse (C).

2. The system according to claim 1, wherein the bridge structure (3), or at least one part thereof (30a, 30b), is lengthwise adjustable, particularly in a substantially telescopic manner, to enable adaptation of the bridge structure (3) to the width of the watercourse (C).

3. The system according to claim 1 or claim 2, wherein the bridge structure (3) is prearranged for supporting also the electric generator (11).

4. The system according to claim 3, wherein the bridge structure (3) and the transmission means (12, 13) are configured for supporting the mechanical interface (14) in a completely immersed condition in the watercourse (C), with the bridge structure (3) over-bridging the watercourse.

5. The system according to claim 3 or claim 4, wherein the electric generator (11) has a watertight housing (14a) which is designed to be supported by the bridging structure (3) in an immersed condition in the watercourse (C), with the bridge structure (3) over-bridging the watercourse.

6. The system according to claim 3, wherein the transmission means (12, 13) comprise one of
- a rigid transmission shaft (13), rotatably supported by means of the bridge structure (3) for extending in a substantially transverse direction, particularly a substantially perpendicular direction, relative to the surface (L) of the watercourse (C), the transmission shaft (12) being operatively arranged between the mechanical interface (14) and the electric generator (11); and
- a closed-loop transmission member (16), such as a belt, operatively arranged between the mechanical interface (14) and the electric generator (11).

7. The system according to any of the preceding claims, wherein
- the bridge structure (3) comprises two parts (30a, 30b) which are operatively couplable to each other, each part (30a, 30b) being configured to be secured to a respective bank (S) of the watercourse (C),
- at least one of the two parts (30b, 30b) is movable relative to the other part, at least between a first position and a second position, wherein in the first position the two parts (30a, 30b) are mutually coupled or rest against each other, to keep a corresponding generating arrangement (2) in a respective operating condition, whereas in the second position the two parts (30a, 30b) are uncoupled or spaced apart from each other, with the generating arrangement (2) which is in a respective inoperative condition,
the bridge structure (3) comprising in particular means (31) for hinging the at least one movable part (30a, 30b) to the respective banks (S) of the watercourse (C).

8. The system according to any of the preceding claims, comprising means - such as gratings or the like - for protecting immersed parts of the generating arrangement (2) from foreign bodies possibly present in the watercourse (C), the means for protecting being supported by the bridge structure (3).

9. The system according to any of the preceding claims, wherein the bridge structure (3) supports a plurality of said generating arrangements (2).

10. The system according to any of the preceding claims, comprising a plurality of said units (1), wherein the electric generators (11) of the generating units (2) of different units (1) are designed to be electrically connected in parallel.
